# EUROPÄISCHE PATENTSCHRIFT

(11) **EP 0 304 994 B1**
(45) Veröffentlichungstag und Bekanntmachung des Hinweises auf die Patenterteilung: **20.01.1993**
(21) Anmeldenummer: 88201749.4
(22) Anmeldetag: 16.08.1988
(51) Int. Cl.: G02F 1/01, G02F 1/09

(54) **Polarisationsverwürfler**
Polarisation scrambler
Brouilleur de polarisations

(30) Priorität: 22.08.1987 DE 3728107
(43) Veröffentlichungstag der Anmeldung: 01.03.1989
(73) Patentinhaber: Philips Patentverwaltung GmbH, 22335 Hamburg (DE); Philips Electronics N.V., 5621 BA Eindhoven (NL)
(72) Erfinder: Brinkmeyer, E., Prof., Dr., D-2110 Buchholz (DE); Brennecke, Wolfgang, Dipl.-Phys., D-2000 Hamburg 20 (DE); Otto, Rainer, Dipl.-Ing., D-2000 Hamburg 50 (DE)
(74) Vertreter: Koch, Ingo

(56) Entgegenhaltungen:
- EP-A- 0 248 234
- DE-A- 3 530 738
- ELECTRONICS LETTERS, Band 22, Nr. 25, Dezember 1986, Seiten 1341-1343, Stevenage, Herts, GB; R. NOE: "Endless polarisation control experiment with three elements of limited birefringence range"
- ELECTRONICS LETTERS, Band 21, Nr. 18, 29. August 1985, Seiten 787-788, Stevenage, Herts, GB; T. OKOSHI et al.: "New polarisation-control scheme for optical heterodyne receiver using two faraday rotators"
- ELECTRONICS LETTERS, Band 23, Nr. 12, 4. Juni 1987, Seiten 634-636, Stevenage, Herts, GB; A.D. KERSEY et al.: "Monomode fibre polarisation scrambler"

## Beschreibung

Die Erfindung bezieht sich auf einen Polarisationsverwürfler mit einem steuerbaren optischen Verzögerungselement, dessen Verzögerung mittels einer Steueranordnung zeitveränderlich derart periodisch steuerbar ist, daß bei gegebenem Polarisationszustand (SOP) des in den Polarisationsverwürfler eingehenden Lichts an seinem Ausgang variierende Polarisationszustände der Art auftreten, daß zumindest annähernd in jedem Polarisationszustand im zeitlichen Mittel gleiche Lichtintensitäten austreten.

Eine solche Anordnung ist durch Electronics Letters, Vol. 23, No. 12, Seiten 634 und 635, bekannt.

In optischen Übertragungssystemen können einer Sendelichtquelle, insbesondere einem Laser, optische Elemente nachgeordnet sein, deren Verhalten vom Polarisationszustand (SOP) des Lichts abhängig ist. Beispielsweise kann die Durchlässigkeit eines Strahlteilers vom SOP des Eingangslichts abhängen. Eindeutige Übertragungsverhältnisse ergäben sich dann, wenn man einen stets gleichbleibenden SOP im Verlaufe einer Übertragungsstrecke gewährleisten könnte. Das wäre jedoch, falls überhaupt, nur durch aufwendige Regelprozesse erreichbar.

Insbesondere dann, wenn in der Übertragungsstrecke Lichtwellenleiter (LWL) angeordnet sind, welche nicht speziell polarisationserhaltend gestaltet sind, ergeben sich infolge zeitveränderlicher doppelbrechender Eigenschaften herkömmlicher LWL unvermeidlich durch diese induzierte Veränderungen des SOP.

Im eingangs genannten Fall sollen diese Schwierigkeiten dadurch behoben werden, daß Eingangslicht mit bekanntem SOP über einen Polarisationsverwürfler (polarization scrambler) geleitet wird, so daß an dessen Ausgang Licht mit sich periodisch zeitlich änderndem SOP entsteht. In einer gewissen Polarisationsebene steht dann am Ausgang des Polarisationsverwürflers zwar weniger als die bei optimaler Anpassung mögliche Lichtleistung zur Verfügung, aber diese Lichtleistung wird dann auch bei zufällig schwankenden Polarisationsdrehungen der Übertragungsstrecke im zeitlichen Mittel konstant übertragen.

Besondere Probleme entstehen bei Rückstreumeßgeräten bzw. Reflektometern, mit welchen das Dämpfungsverhalten von Monomode-LWL gemessen wird (OTDR). Da die Rückstreusignale bei Monomode-LWL sehr viel kleiner als beispielsweise beim Multimode-LWL sind, ist ein Heterodyn-Empfang vorteilhaft.Dabei werden die Rückstreusignale einem Lokaloszillatorstrahl (LO) abweichender Licht-Frequenz überlagert. Ausgewertet werden die entstehenden zwischenfrequenten Signale. Aussagefähig sind diese Signale dann, wenn die SOPs des LO und der Rückstreusignale in fester Beziehung zueinander stehen und im Idealfall gleich sind. Eine solche Voraussetzung ist wegen der zufällig variierenden Beeinflussung des SOP durch den zu messenden LWL nicht gegeben.

Man kann mit einem Depolarisator das für die Messung verwendete Laserlicht depolarisieren. (Vgl. Optical and Quantum Electronics 15, S. 281-287). Würde man dazu eine sogenannte Vorlauffaser verwenden, in welcher die SOPs der Lichtanteile unterschiedlicher Wellenlänge natürlich verschieden stark verändert werden, wären bei schmalbandigem Sendelicht (z.B. 100 kHz) extrem lange Vorlauffasern erforderlich.

Bei Verwendung eines Polarisationsverwürflers der eingangs genannten Art ist Voraussetzung, daß der SOP des Eingangslichts unveränderlich und die Raumlage des Polarisationsverwürflers diesem präzise zugeordnet ist. Ein solcher Polarisationsverwürfler muß also zwangsläufig unmittelbar dort angeordnet sein, wo der SOP noch praktisch stabil ist, also insbesondere am Ausgang eines Lasers.

Der Erfindung liegt die Aufgabe zugrunde, die Anordnung der eingangs genannten Art so zu gestalten, daß sie vielseitiger einsetzbar ist.

Die Lösung gelingt dadurch, daß mindestens ein weiteres, dem ersten in Lichtausbreitungsrichtung folgendes und mittels einer Steueranordnung steuerbares Verzögerungselement vorgesehen ist, welches in der Darstellung auf der Poincaré-Kugel Polarisationszustände entsprechend einer anderen Drehachse als die dem ersten Verzögerungselement eigentümliche hervorruft, und daß die Verzögerungselemente über ihre Steueranordnungen mit unterschiedlichen Frequenzen oder unkorreliert unperiodisch ansteuerbar sind.

Während im bekannten Fall ein genau definierter Eingangs-SOP erforderlich ist, ist die Wirkung des erfindungsgemäßen Polarisationsverwürflers bei mindestens ebenso guter Wirkung völlig unabhängig von dem Eingang-SOP. Man kann also die erfindungsgemäße Anordnung an beliebiger Stelle einer Übertragungsstrecke vorsehen, bei einem Heterodyn-Reflektometer also auch unmittelbar vor der Überlagerungsstelle des LO-Signals mit dem Rückstreusignal in dem LO-Zweig, weil dort eine geringfügige, durch den Polarisationsverwürfler bedingte Abschwächung der ohnehin genügend großen LO-Energie völlig unkritisch ist.

Lineare Verzögerungselemente sind solche, welche in zwei zur Lichtausbreitungsrichtung und zueinander senkrechten Hauptachsen unterschiedliche und im Falle der vorliegenden Erfindung steuerbare Brechungsindizes aufweisen. Der Polarisationszustand einfallenden Lichts wird dann verändert, sofern er nicht ursprünglich mit einer der beiden Hauptachsen zusammenfiel. Eine solche Wirkung kann in diskreten Bauelementen, beispielsweise elektrooptisch mittels eines elektrischen Feldes (Kerr-Effekt) oder auch in faseroptischen LWL oder in einem planaren LWL durch Aufbringen einer mechanischen Spannung erzielt werden (Spannungsdoppelbrechung, vgl. Electronic Letters 1986, Vol. 22, S. 1342).

Zirkulare Verzögerungselemente sind insbesondere Faraday-Rotatoren, in welchen durch Einwirken eines in Lichtausbreitungsrichtung verlaufenden magnetischen Feldes, z.B. in einem Lichtwellenleiter, eine Drehung des Polarisationszustandes bewirkt wird (vgl. Electronic Letters 1985, Vol. 21, S. 788).

Die Darstellung aller denkbaren Polarisationszustände auf der sogenannten Poincaré-Kugel und deren Zuhilfenahme zur Erklärung der Wirkung von Verzögerungselementen ist fachüblich, z.B. auch in der eingangs genannten Druckschrift oder in Appl.Phys.Lett. 35, Seiten 840-842.

Während im bekannten Fall nur auf einer Rotationslinie der Oberfläche der Poincaré-Kugel befindliche SOPs durchfahren werden, wird erfindungsgemäß bei beliebigem Eingangs-SOP bereits bei nur zwei Verzögerungselementen eine solche Auswahl der auf der gesamten Oberfläche der Poincaré-Kugel verzeichneten SOPs durchfahren, daß über einen beliebigen elliptischen Polarisationszustand stets eine im zeitlichen Mittel gleiche Leistung gemessen wird.

Für die Erfindung wird das für Polarisationssteller bereits bekannte Prinzip (Appl.Phys.Lett. 35, S. 840-841 oder Electronics Letters 1986, Seite 1342) angewendet, daß nämlich mittels mehrerer einstellbarer Verzögerungselemente jeder Oberflächenpunkt einer Poincaré-Kugel erreichbar ist. Erfindungsgemäß werden diese Stellelemente mit jeweils fester aber voneinander verschiedener Frequenz angesteuert, so daß während eines Mittelungszeitintervalls automatisch eine definierte und auf der gesamten Oberfläche der Poncaré-Kugel verteilte Anzahl von SOPs mindestens einmal, vorzugsweise jedoch mehrmals durchfahren wird. Die gleiche Wirkung ist natürlich durch unkorreliert unperiodische Ansteuerung der Verzögerungselemente erreichbar, wenn deren Verzögerungswinkel z.B. durch voneinander unabhängige Rauschgeneratoren gesteuert werden.

Deshalb ist gemäß einer Weiterbildung vorgesehen, daß die Ansteuerfrequenzen für die Erzeugung der periodisch wechselnden Verzögerungen der Verzögerungselemente sowie deren Differenzfrequenzen jeweils größer als der Kehrwert eines Auswertezeitintervalls zur Erfassung des Ausgangslichts des Polarisationsverwürflers ist.

Der Oberflächenbereich der Poincaré-Kugel wird dabei genügend vollständig erfaßt, wenn die linearen Verzögerungselemente derart gesteuert sind, daß die Verzögerungswerte um einen Differenzwinkel im Bereich von 0 bis 2 π(1 ± 0,1) insbesondere annähernd 2 π, zeitabhängig variiert werden. Insbesondere auch bei unkorreliert unperiodischer Ansteuerung sollten die Differenzwinkel annähernd gleich verteilt im gesamten Intervall liegen.

Grundsätzlich besteht die Möglichkeit, ein lineares Verzögerungselement und ein zirkulares Verzögerungselement oder mindestens zwei lineare Verzögerungselemente zu verwenden. Eine besonders gut geeignete Verteilung von SOPs wird dadurch erreicht, daß der stetige zeitabhängige Verlauf der Verzögerung von einer Dreieckskurve zu jedem Zeitpunkt weniger abweicht, als der positiven oder negativen Differenz zu einer einhüllenden Sinuskurve entspricht.

Die für eine steuerbare spannungsoptische Doppelbrechung erforderliche Kraft kann elektromagnetisch oder piezokeramisch (vgl. Electronic Letters 1986, S. 1181) erzeugt werden. Dabei kann eine Druckkraft oder auch eine Biegungskraft im Verzögerungselement, z.B. in einem LWL, gebildet werden.

Gemäß einer besonders einfachen Lösung ist vorgesehen, daß einem linearen Verzögerungselement zur Erzeugung einer Spannungsdoppelbrechung ein piezokeramischer Druckgenerator zugeordnet ist, an dessen Steueranschlüsse eine Wechselspannung anschließbar ist.

Alternativ ist es möglich, daß einem Monomode-LWL eine Biegeeinrichtung zugeordnet ist.

Die Erfindung wird anhand eines in der Zeichnung dargestellten vorteilhaften Ausführungsbeispiels näher erläutert.
- Fig. 1: zeigt eine Prinzipanordnung eines erfindungsgemäßen Polarisationsverwürflers
- Fig. 2: zeigt eine bevorzugte Ausführungsart unter Verwendung von elektromagnetischen Druckgeneratoren
- Fig. 3: zeigt einen für die Erfindung günstigen Verlauf der Verzögerungswinkel φ der Verzögerungselemente.

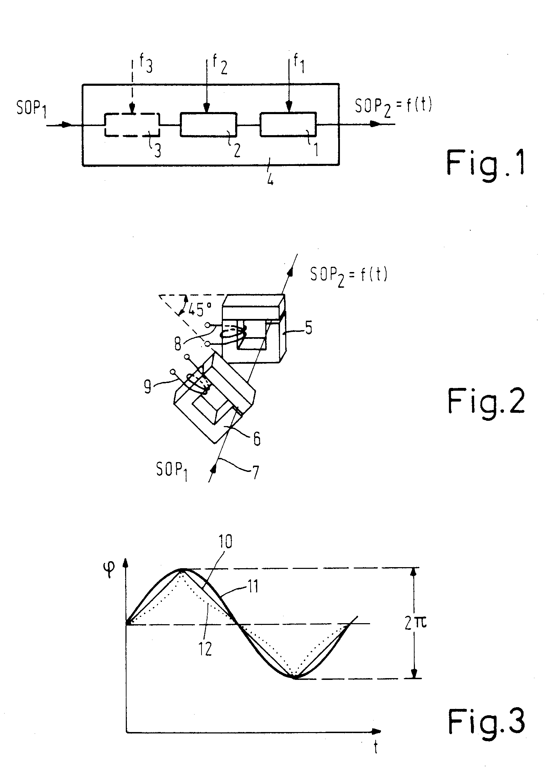

In Fig. 1 ist schematisch ein Polarisationsverwürfler 4 mit drei Verzögerungselementen 1,2, und 3 angedeutet, welche prinzipiell linear oder auch zirkular wirken können, sofern mindestens ein linear wirkendes vorgesehen ist.

Ein drittes Verzögerungselement 3 ist im allgemeinen nicht erforderlich, kann aber in besonders schwierigen Fällen zur weiteren Verwürfelung des SOP eingesetzt werden.

Bei einem beliebigen Eingangs-SOP₁ entsteht am Ausgang ein SOP₂, welcher sich zeitabhängig ändert und dabei eine gezielt und gewichtet verteilte Auswahl der Gesamtzahl der auf einer Poincaré-Kugel verzeichneten SOPs annimmt.

Die Frequenzen f₁, f₂ und f₃, mit welchen die eine Verzögerung bedingenden physikalischen Eigenschaften der Verzögerungselemente 1,2 und 3 periodisch verändert werden, müssen verschieden voneinander sein. Die Periodendauern dieser Frequenzen und deren Differenzfrequenzen sollten kleiner, möglichst erheblich kleiner als ein Mittlungszeitintervall sein, in welchem beispielsweise ein Messvorgang zur Ermittlung des Dämpfungsverhaltens eines Monomode-LWL durchgeführt wird.

Bei einem konkreten Anwendungsfall für einen Heterodyn-OTDR wurden zwei elektromagnetische Druckgeneratoren 5 und 6 gemäß Fig. 2 verwendet, welche jeweils zwischen Joch und Anker in 45^{o} zueinander verschobener Stellung möglichst eng benachbarte Abschnitte eines Monomode-LWL 7 einklemmen. Durch die Erregerspule 8 wurde ein Strom mit einer Frequenz f₁ = 20 Hz und durch die Erregerspule 9 ein Strom mit einer Frequenz von f₂ = 17,3 Hz geleitet, wobei diese Wechselströme jeweils einem Gleichstrom überlagert waren.

Die Amplituden dieser Wechselströme wurden derart vorgegeben, daß sich zwischen den positiven und negativen Maximalwerten jeweils Unterschiede der Verzögerungswinkel φ von 2π ergaben. Dabei ist φ der Phasenunterschied, den zwei in den Hauptachsen polarisierte Wellen erfahren würden.

Die Kurvenform der Wechselströme wurde so gewählt, daß sich etwa ein Verlauf des Verzögerungswinkels φ über der Zeit t gemäß Kennlinie 10 nach Fig. 3 ergab. Dabei gilt, daß der Verzögerungswinkel φ etwa der Anpreßkraft der Druckgeneratoren 5 und 6, der Wechselanteil der Anpreßkraft im gewählten Strombereich annähernd den Wechselanteilen der Ströme in den Erregerspulen 8 bzw. 9 proportional ist. Alternativ könnte die auf den Monomode-LWL 7 einwirkende Kraft auch durch piezokeramische Druckgeneratoren erzeugt werden. Eine gleichartige Wirkung ist auch durch geeignet gesteuerte Biegung des Monomode-LWL 7 erzielbar.

In die Anordnung nach Fig. 2 wurde Licht mit verschiedenen Eingangspolarisationszuständen eingekoppelt. Die Ausgangsleistung wurde mit einem Soleil-Babinet-Kompensator und einem Polarisator bei verschiedenen Polarisationszuständen detektiert.

Der zeitliche Mittelwert der Ausgangsleistung änderte sich dabei in Abhängigkeit von den gewählten Polarisationszuständen nur um etwa + 1%.

Dabei zeigte sich, daß relativ große Abweichungen von den optimalen Einstellungen des räumlichen Verdrehwinkels zwischen den Druckgeneratoren 5 und 6, des Hubs des Verzögerungswinkels und der Kurvenform des zeitlichen Verlaufs des Verzögerungswinkels (optimal gemäß Kennlinie 10, Änderungen im Bereich zwischen der umhüllenden Sinuslinie 11 und ihrer Spiegelkurve 12 in Fig. 3 waren zulässig) die Schwankungsbreite des zeitlichen Mittelwerts der Ausgangsleistung nicht wesentlich vergrößern. Man sollte zwar die optimalen Werte anstreben, jedoch ist für deren Einjustierung keine außergewöhnliche Sorgfalt erforderlich.

Ein besonderer Vorteil der Anordnung nach Fig. 2 ist, daß der optisch leitende Teil der Verzögerungselemente ein Monomode-LWL 7 ist, welcher ohne Schwierigkeiten mit anderen Monomode-LWL einer Übertragungsstrecke gekoppelt werden oder ein ohnehin vorhandener Bestandteil der Übertragungsstrecke sein kann.

Die Anordnung nach Fig. 2 wurde in ein Heterodyn-Reflektometer in den LO-Zweig integriert, damit Polarisationsschwankungen, die insbesondere in der Meßfaser entstehen, ausgemittelt werden. Der Rauschabstand wurde dadurch erheblich vergrößert. Infolgedessen konnten größere LWL-Längen gemessen werden. Bei gleicher Meßdauer ergeben sich also größere Reichweiten des Reflektometers oder bei gleicher Reichweite kürzere Meßzeiten, da eine geringere Vielzahl von statistisch zu mittelnden Wiederholungsmessungen ausreichend ist.

Der erfindungsgemäße Polarisationsverwürfler kann weiterhin überall dort Verwendung finden, wo ein im zeitlichen Mittel von Polarisationseffekten unabhängiges Meßergebnis gewünscht wird.

## Patentansprüche

1. Polarisationsverwürfler, mit einem steuerbaren optischen Verzögerungselement, dessen Verzögerung mittels einer Steueranordnung zeitveränderlich derart periodisch steuerbar ist, daß bei gegebenem Polarisationszustand (SOP) des in den Polarisationsverwürfler eingehenden Lichts an seinem Ausgang variierende Polarisationszustände der Art auftreten, daß zumindest annähernd in jedem Polarisationszustand im zeitlichen Mittel gleiche Lichtintensitäten austreten,
dadurch gekennzeichnet, daß mindestens ein weiteres, dem ersten in Lichtausbreitungsrichtung folgendes und mittels einer Steueranordnung steuerbares Verzögerungselement (1,2,3) vorgesehen ist, welches in der Darstellung auf der Poincaré-Kugel Polarisationszustände entsprechend einer anderen Drehungsachse als die dem ersten Verzögerungselement eigentümliche hervorruft, und daß die Verzögerungselemente (1,2,3) über ihre Steueranordnungen mit unterschiedlichen Frequenzen (f₁, f₂, f₃) oder unkorreliert unperiodisch steuerbar sind.

2. Anordnung nach Anspruch 1,
dadurch gekennzeichnet, daß die Verzögerungselemente zwei lineare Verzögerungselemente (5,6) sind, deren optische Hauptachsen in einem spitzen Winkel im Bereich von 25 bis 65^{o}, vorzugsweise annähernd 45^{o}, zueinander verlaufen.

3. Anordnung nach Anspruch 1,
gekennzeichnet durch die Verwendung eines linearen und eines zirkularen Verzögerungselements.

4. Anordnung nach einem der Ansprüche 1 bis 3,
dadurch gekennzeichnet, daß die Verzögerung der linearen Verzögerungselemente (5,6) durch Spannungsdoppelbrechung bewirkbar ist.

5. Anordnung nach einem der Ansprüche 1 bis 3,
dadurch gekennzeichnet, daß das zirkulare Verzögerungselement ein Faraday-Rotator ist.

6. Anordnung nach Anspruch 4,
dadurch gekennzeichnet, daß die linearen Verzögerungselemente aus einem Monomode-LWL (7) und zwei Druckgeneratoren (5,6) bestehen, die in LWL-Richtung hintereinander und mit winkelversetzter Druckrichtung auf dem LWL (7) angebracht sind.

7. Anordnung nach einem der Ansprüche 1 bis 6,
dadurch gekennzeichnet, daß die Ansteuerfrequenzen (f₁, f₂, f₃) für die Erzeugung der periodisch wechselnden Verzögerungen der Verzögerungselemente (1,2,3 bzw. 5,6) sowie deren Differenzen jeweils größer als der Kehrwert eines Auswertungszeitintervalls zur Erfassung des Ausgangslichts des Polarisationsverwürflers ist.

8. Anordnung nach einem der Ansprüche 1 bis 7,
dadurch gekennzeichnet, daß die Steueranordnungen der linearen Verzögerungselemente derart betreibbar sind, daß die Verzögerungswerte um einen Differenzwinkel von 0 bis 2 π(1 ± 0,1), insbesondere annähernd 2 π zeitabhängig variiert werden.

9. Anordnung nach einem der Ansprüche 1 bis 8,
dadurch gekennzeichnet, daß die Steueranordnungen der zirkularen Verzögerungselemente derart betreibbar sind, daß die Drehungen der Polarisationsebene in einem Winkelbereich von 0 bis π(1 ± 0,1), insbesondere annähernd π, zeitabhängig variiert werden.

10. Anordnung nach Anspruch 8 oder 9,
dadurch gekennzeichnet, daß der stetige zeitabhängige Verlauf der von einem Verzögerungselement bewirkten Verzögerung derart steuerbar ist, daß er von einer Dreieckskurve zu jedem Zeitpunkt weniger abweicht, als der positiven oder negativen Differenz zu einer einhüllenden Sinuskurve entspricht (Fig. 3).

11. Anordnung nach einem der Ansprüche 6 bis 10,
dadurch gekennzeichnet, daß ein Monomode-LWL (7) zwischen einem ferromagnetischen Joch und einem ferromagnetischen Anker geführt ist, von welchen mittels einer durch Wechselstrom steuerbaren Erregerspule (8, 9) eine Maxwellsche Kraft auf den Monomode-LWL (7) ausübbar ist, um eine Spannungsdoppelberechung zu erzeugen (Fig. 2).

12. Anordnung nach einem der Ansprüche 6 bis 10,
dadurch gekennzeichnet, daß einem linearen Verzögerungselement zur Erzeugung einer Spannungsdoppelbrechung ein piezokeramischer Druckgenerator zugeordnet ist, an dessen Steueranschlüsse eine Wechselspannung anschließbar ist.

13. Anordnung nach einem der Ansprüche 6 bis 10,
dadurch gekennzeichnet, daß einem Monomode-LWL (7) eine Biegeeinrichtung zugeordnet ist.

## Claims

1. A polarization scrambler comprising a controllable optical retardation element of which the retardation is controllable as a function of time by a control arrangement in such a way that with a given state of polarization (SOP) of the light entering the polarization scrambler varying states of polarization occur at its output in such a way that, averaged in time, the light intensifies emerging in each SOP are at least substantially equal, characterized in that at least a further retardation element (1, 2, 3) controllable by a control arrangement and following the first element in the light propagation direction is provided which element, represented on the Poincaré sphere, creates states of polarization in accordance with a rotational axis which is different from that associated with the first retardation element and in that the retardation elements (1, 2, 3) are controllable by the control arrangements at different frequencies (f₁, f₂, f₃) or in an uncorrelated aperiodical manner.

2. An arrangement as claimed in Claim 1, characterized in that the retardation elements are two linear retardation elements (5, 6) whose principal optical axes extend to each other in an acute angle in the range between 25° and 65°, preferably approximately 45°.

3. An arrangement as claimed in Claim 1, characterized by the use of a linear and a circular retardation element.

4. An arrangement as claimed in any one of Claims 1 to 3, characterized in that the retardation of the linear retardation elements (5, 6) is achievable by stress birefringence.

5. An arrangement as claimed in any one of Claims 1 to 3, characterized in that the circular retardation element is a Faraday rotator.

6. An arrangement as claimed in Claim 4, characterized in that the linear retardation elements comprise a monomode light waveguide (7) and two pressure generators (5, 6), which pressure generators are arranged one after the other in the light waveguide direction and with an angularly displaced pressure direction on the light waveguide (7).

7. An arrangement as claimed in any one of Claims 1 to 6, characterized in that the control frequencies (f₁, f₂, f₃) for generating the periodically alternating retardations of the retardation elements (1, 2, 3 and 5, 6) as well as their differences are larger than the reciprocal value of a measurement time interval for capturing the output light of the polarization scrambler.

8. An arrangement as claimed in any one of Claims 1 to 7, characterized in that the control arrangements for the linear retardation elements can be controlled in such a way that the retardation values are varied in a time-dependent manner about a differential angle of 0 to 2π (1 ± 0.1), particularly approximately 2π.

9. An arrangement as claimed in any one of Claims 1 to 8, characterized in that the control arrangements for the circular retardation elements can be controlled in such a way that the rotations of the polarization plane are varied in a time-dependent manner in an angular range of 0 to π (1 ± 0.1), particularly approximately π.

10. An arrangement as claimed in Claim 8 or 9, characterized in that the constant time-dependent retardation variation brought about by a retardation element can be controlled in such a way that, at any instant, it deviates less from a triangular curve than the corresponding positive or negative distance wo an envelope sine curve (Fig. 3).

11. An arrangement as claimed in any one of Claims 6 to 10, characterized in that a monomode light waveguide (7) extends between a ferro-magnetic yoke and a ferro-magnetic armature, which can exert a Maxwellian force on the monomode light waveguide (7) via an AC-controllable operating coil (8, 9) to create stress birefringence (Fig. 2).

12. An arrangement as claimed in any one of Claims 6 to 10, characterized in that a linear retardation element for creating stress birefringence comprises as piezo-ceramical pressure generator to the control terminals of which an AC-current is connectable.

13. An arrangement as claimed in any one of Claims 6 to 10, characterized in that a bending device is associated with a monomode light waveguide (7).

## Revendications

1. Brouilleur de polarisation comportant un élément à retard optique réglable, dont le retard peut être réglé périodiquement avec variation dans le temps, à l'aide d'un dispositif de commande, d'une façon telle que, pour un état de polarisation (SOP) donné de la lumière entrant dans le brouilleur de polarisation, apparaissent, à la sortie de ce brouilleur, des états de polarisation variables qui sont tels qu'au moins approximativement dans chaque état de polarisation, les intensités lumineuses de sortie soient les mêmes en moyenne dans le temps, caractérisé en ce qu'en aval du premier élément à retard, dans le sens de la propagation de la lumière, est prévu au moins un autre élément à retard (1, 2, 3) qui peut être commandé par un dispositif de commande et qui, dans la représentation sur la sphère de Poincaré, suscite des états de polarisation correspondant à un autre axe de rotation que celui qui est propre au premier élément à retard, et que les éléments à retard (1, 2, 3) peuvent être activés, par l'intermédiaire de leurs dispositifs de commande avec des fréquences différentes (f₁, f₂, f₃) ou de manière apériodique sans corrélation.

2. Dispositif suivant la revendication 1, caractérisé en ce que les éléments à retard sont deux éléments à retard linéaires (5, 6), dont les axes optiques principaux s'étendent l'un par rapport à l'autre en formant un angle aigu de l'ordre de 25 à 65° et, de préférence, d'à peu près 45°.

3. Dispositif suivant la revendication 1, caractérisé par l'utilisation d'un élément à retard linéaire et d'un élément à retard circulaire.

4. Dispositif suivant l'une quelconque des revendications 1 à 3, caractérisé en ce que le retard des éléments à retard linéaires (5, 6) peut être provoqué par biréfringence de compression.

5. Dispositif suivant l'une quelconque des revendications 1 à 3, caractérisé en ce que l'élément à retard circulaire est un rotateur de Faraday.

6. Dispositif suivant la revendication 4, caractérisé en ce que les éléments à retard linéaires sont constitués d'un guide d'ondes lumineuses monomode (7) et de deux générateurs de pression (5, 6), qui sont montés l'un derrière l'autre dans la direction du guide d'ondes lumineuses avec des directions de pression sur le guide d'ondes lumineuses (7) décalées angulairement.

7. Dispositif suivant l'une quelconque des revendications 1 à 6, caractérisé en ce que les fréquences d'activation (f₁, f₂, f₃) pour la production des retards variant périodiquement des éléments à retard (1, 2, 3 ou 5, 6), ainsi que leurs différences sont chaque fois supérieures à l'inverse d'un intervalle de temps d'évaluation prévu pour capter la lumière de sortie du brouilleur de polarisation.

8. Dispositif suivant l'une quelconque des revendications 1 à 7, caractérisé en ce que les dispositifs de commande des éléments à retard linéaires peuvent être mis en oeuvre de façon telle que les valeurs de retard soient modifiées en fonction du temps d'un angle de différence de 0 à 2π (1 ± 0,1), en particulier d'à peu près 2π.

9. Dispositif suivant l'une quelconque des revendications 1 à 8, caractérisé en ce que les dispositifs de commande des éléments à retard circulaires peuvent être mis en oeuvre d'une façon telle que les rotations du plan de polarisation soient modifiées en fonction du temps dans un domaine angulaire de 0 à π (1 ± 0,1), en particulier d'à peu près π.

10. Dispositif suivant la revendication 8 ou 9, caractérisé en ce que l'évolution continue en fonction du temps du retard introduit par un élément à retard peut être commandée de façon telle qu'il s'écarte à chaque moment moins d'une courbe triangulaire que ce qui correspond à la différence positive ou négative par rapport à une courbe sinusoïdale d'enveloppe (Fig. 3).

11. Dispositif suivant l'une quelconque des revendications 6 à 10, caractérisé en ce qu'on fait passer un guide d'ondes lumineuses monomode (7) entre une culasse ferromagnétique et une armature ferromagnétique par lesquelles, à l'aide d'un enroulement d'excitation (8, 9) pouvant être commandé par un courant alternatif, une force de Maxwell peut être exercée sur le guide d'ondes lumineuses monomode (7) pour produire une biréfringence par compression (Fig. 2).

12. Dispositif suivant l'une quelconque des revendications 6 à 10, caractérisé en ce qu'un générateur de pression piézocéramique aux bornes de commande duquel peut être connectée une tension alternative, est associé à un élément à retard linéaire pour produire une biréfringence par compression.

13. Dispositif suivant l'une quelconque des revendications 6 à 10, caractérisé en ce qu'un dispositif de flexion est associé à un guide d'ondes lumineuses monomode (7).
